# EUROPEAN PATENT APPLICATION

(11) **EP 4 659 846 A1**
(43) Date of publication of application: **10.12.2025**
(21) Application number: 24750347.7
(22) Date of filing: 31.01.2024
(51) Int. Cl.: B01D 61/36, B01D 71/02

(54) **TRANSIENT OPERATION METHOD FOR SEPARATION DEVICE**

(30) Priority: 03.02.2023 JP 2023015659
(71) Applicant: NGK Insulators, Ltd., Nagoya-shi, Aichi 467-8530 (JP)
(72) Inventor: KOJIMA, Miyuki, Nagoya-shi, Aichi 467-8530 (JP); SHIMIZU, Katsuya, Nagoya-shi, Aichi 467-8530 (JP); IIDA, Kazuki, Nagoya-shi, Aichi 467-8530 (JP); NAKAGAWA, Kosuke, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Mewburn Ellis LLP
(86) International application number: PCT/JP2024/003109
(87) International publication number: WO 2024/162398

(57) **Abstract**

Provided is a transient operation method for a separation device including a separation membrane complex, which enables prevention of breaking of the separation device and the separation membrane complex. The transient operation method for a separation device of the present disclosure is a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including supplying gases to the first flow path and the second flow path, respectively, and heating the separation membrane complex. An average relative humidity of a gas A supplied to the first flow path is higher than an average relative humidity of a gas B supplied to the second flow path.

## Description

### Technical Field

The present disclosure relates to a transient operation method for a separation device.

### Background Art

There has been known a membrane separation method that uses a separation membrane to separate a specific substance from a mixture. As such a membrane separation method, a separation method using, for example, a zeolite membrane has been proposed (see Non Patent Literature 1). A separation device including a separation membrane sometimes requires heating of the separation membrane at the time of activation of the device so that the separation membrane can fulfill a predetermined function.

### Citation List

### Non Patent Literature

[NPL 1] Development of Membrane Aided Reactor, Mitsui Zosen Technical Review, February 2003, No. 178, 115-120

### Summary of Invention

### Technical Problem

A primary object of the present disclosure is to provide a transient operation method for a separation device including a separation membrane complex, which enables prevention of breaking of the separation device and the separation membrane complex.

### Solution to Problem

[1] According to an embodiment of the present disclosure, there is provided a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including supplying gases to the first flow path and the second flow path, respectively, and heating the separation membrane complex. An average relative humidity of a gas A supplied to the first flow path is higher than an average relative humidity of a gas B supplied to the second flow path.
[2] In the transient operation method for a separation device according to the above-mentioned item [1], the average relative humidity of the gas B may be 10% or less.
[3] In the transient operation method for a separation device according to the above-mentioned item [1] or [2], the separation membrane may be a zeolite membrane.
[4] In the transient operation method for a separation device according to any one of the above-mentioned items [1] to [3], the zeolite membrane may be made of LTA-type zeolite.
[5] According to another embodiment of the present disclosure, there is provided a transient operation method for a separation device, the separation device including a separation membrane complex including: a separation membrane; and a substrate arranged on one side of the separation membrane, the separation device having a first flow path and a second flow path, the first flow path being positioned on a side closer to the separation membrane of the separation membrane complex, the second flow path being positioned on a side closer to the substrate of the separation membrane complex, the transient operation method including supplying gases to the first flow path and the second flow path, respectively, and heating the separation membrane complex. A relative humidity of a gas A supplied to the first flow path is higher than a relative humidity of a gas B supplied to the second flow path.
[6] The transient operation method according to any one of the above-mentioned items [1] to [5] may be an activation method.
[7] The transient operation method according to any one of the above-mentioned items [1] to [5] may be a stopping method.

### Advantageous Effects of Invention

According to the embodiment of the present disclosure, the transient operation method for a separation device including a separation membrane complex, which enables prevention of breaking of the separation device and the separation membrane complex, can be provided.

### Brief Description of Drawings

FIG. **1** is a schematic configuration view of a separation membrane complex to be used in a transient operation method for a separation device according to one embodiment of the present disclosure.
FIG. **2** is a schematic configuration view of a separation membrane and a substrate of FIG. **1****.**
FIG. **3** is a schematic configuration view of one modification example of the separation membrane complex.
FIG. **4** is a schematic cross-sectional view of the separation membrane complex of FIG. **3****.**
FIG. **5** is a schematic configuration view of another modification example of the separation membrane complex.
FIG. **6** is an explanatory schematic diagram for illustrating how a separation device is operated according to one embodiment of the present disclosure.

### Description of Embodiments

Embodiments of the present disclosure are described below with reference to the drawings, but the present disclosure is not limited to those embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

### A. Transient Operation Method for Separation Device

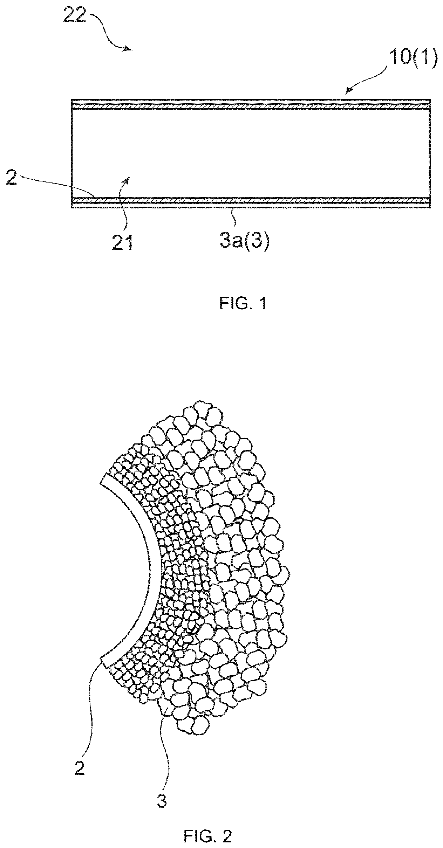

FIG. **1** is a schematic configuration view of a separation membrane complex to be used in a transient operation method for a separation device according to one embodiment of the present disclosure, and FIG. **2** is a schematic configuration view of a separation membrane and a substrate of FIG. **1****.**

The transient operation method for a separation device according to one embodiment of the present disclosure is a transient operation method for a separation device **1** including a separation membrane complex **10.** The separation membrane complex **10** includes: a separation membrane **2;** and a substrate **3** arranged on one side of the separation membrane **2.** The separation device **1** has a first flow path **21** and a second flow path **22.** The first flow path **21** is positioned on a side closer to the separation membrane **2** of the separation membrane complex **10.** More specifically, the first flow path **21** can be positioned closer to the separation membrane **2** of the separation membrane complex **10** than to the substrate **3.** Further, another element (not shown) may be present or absent between the separation membrane **2** and the first flow path **21.** The second flow path **22** is positioned on a side closer to the substrate **3** of the separation membrane complex **10.** More specifically, the second flow path **22** can be positioned closer to the substrate **3** of the separation membrane complex **10** than to the separation membrane **2.** Further, another element (not shown) may be present or absent between the substrate **3** and the second flow path **22.** Although not shown, the separation membrane complex **10** may include any appropriate other elements as long as the effects of the present disclosure are obtained. The separation membrane complex **10** may include, for example, a layer or powder, which protects the whole or part of the separation membrane **2,** an element having a separation function, such as another separation membrane, and another substrate (for example, a layer that is thinner than the substrate **3** and has the same composition as that of the substrate **3)** arranged on the opposite side of the separation membrane **2** to the substrate **3.** Further, the substrate **3** may be partially exposed.

The transient operation method for a separation device includes: supplying gases to the first flow path **21** and the second flow path **22,** respectively; and changing the temperature of (that is, heating or decreasing the temperature of) the separation membrane complex **10.** An embodiment in which the separation membrane complex **10** is heated is described below as a typical example. In one embodiment, the separation membrane complex **10** is heated by supplying gases to the first flow path **21** and the second flow path **22,** respectively. Further, the separation membrane complex **10** may be heated from outside (for example, using any appropriate heating device). In one embodiment, an average relative humidity of a gas A supplied to the first flow path **21** is higher than an average relative humidity of a gas B supplied to the second flow path **22** in the transient operation method. Herein, the term "average relative humidity" refers to the average value of a relative humidity at an upstream-side end portion and a relative humidity at a downstream-side end portion for each of the flow paths. More specifically, when a relative humidity at an inlet, which is calculated from a temperature and a water vapor partial pressure at the inlet, is represented by RH1 and a relative humidity at an outlet, which is calculated from a temperature and a water vapor partial pressure at the outlet, is represented by RH2 for each of the flow paths, the average relative humidity is obtained by the expression of (RH1+RH2)/2. The term "relative humidity" refers to the ratio of a measured water vapor partial pressure to a saturation water vapor pressure at a predetermined temperature. Further, herein, the relative humidity is measured using a dew point meter (capacitive type). A relative humidity measured using another method may be a value close to the relative humidity that is measured with the above-mentioned method. For example, a relative humidity that is measured by collecting a gas at a predetermined measurement position, measuring the percentage of a condensed component through cooling, and analyzing the percentage of moisture contained in the condensed component through liquid chromatography may be a value close to the above-mentioned relative humidity. Further, the relative humidity at the downstream-side end portion of each of the flow paths may also show a tendency similar to that of the average relative humidity. In one embodiment, the gas is supplied to the first flow path under conditions which do not cause condensation on or in the separation membrane complex. Further, in one embodiment, the gas is supplied to the second flow path under conditions which do not cause condensation on or in the separation membrane complex.

In one embodiment, the relative humidity, at the downstream-side end portion of the first flow path **21,** of the gas A supplied to the first flow path **21** (hereinafter also referred to as "relative humidity (AU)") is higher than the relative humidity, at the downstream-side end portion of the second flow path **22,** of the gas B supplied to the second flow path **22** (hereinafter also referred to as "relative humidity (BU) ") .

In one embodiment, after the separation device **1** is activated using the above-mentioned transient operation method, heating is continued until the separation membrane reaches a predetermined temperature. Then, the separation device starts a steady operation. During the steady operation, a fluid that permeates through the separation membrane **2** (for example, a mixture containing water, which corresponds to a permeable substance, and a less permeable organic compound) is supplied to the first flow path **21.** A substance that has permeated through the separation membrane **2** flows through the second flow path **22.** Heating the separation membrane complex **10** by the transient operation method allows the separation membrane **2** to demonstrate predetermined separation performance during the steady operation.

In the embodiment of the present disclosure, the bumping, sudden expansion, thermal shock, and the like of water in the substrate **3** can be suppressed by lowering the average relative humidity of the gas B supplied to the second flow path **22,** that is, the gas B supplied to the substrate **3** side or the relative humidity at the downstream-side end portion of the corresponding flow path. Thus, the breaking of the separation membrane complex **10** and/or the separation device **1** can be prevented. In one embodiment, the moisture amount (relative humidity) of the gas A supplied to the first flow path is set to a given amount or more. The breaking of the separation membrane can be prevented by supplying the gas containing moisture at the time of activation. Further, in the disclosure of the present application, the problem resulting from contained water (breaking of the separation membrane due to the bumping, sudden expansion, thermal shock, or the like of water) can be solved by lowering the average relative humidity of the gas B or the relative humidity at the downstream-side end portion of the corresponding flow path.

The difference between the average relative humidity of the gas B and the average relative humidity of the gas A (average relative humidity (%) of the gas B-average relative humidity (%) of the gas A) is preferably more than 2% (points) and 95% (points) or less, more preferably from 2% (points) to 50% (points), still more preferably from 2% (points) to 15% (points). When the difference falls within such ranges, the above-mentioned effect becomes pronounced. Further, the breaking of the separation membrane **2** at the time of heating can be prevented. When, for example, the average relative humidity of the gas B is 70% and the average relative humidity of the gas A is 50%, the difference between the average relative humidity of the gas A and the average relative humidity of the gas B (average relative humidity (%) of the gas B-average relative humidity (%) of the gas A) is 20%.

The difference between the relative humidity (BU) of the gas B and the relative humidity (AU) of the gas A (relative humidity (BU) (%)-relative humidity (AU) (%) of the gas A) is preferably more than 2% (points) and 95% (points) or less, more preferably from 2% (points) to 50% (points), still more preferably from 2% (points) to 15% (points). When the difference falls within such ranges, the above-mentioned effect becomes pronounced. Further, the breaking of the separation membrane **2** at the time of heating can be prevented.

The average relative humidity of the gas A is preferably 0.1% or more, more preferably 0.5% or more, still more preferably 5% or more. When the average relative humidity of the gas A falls within such ranges, the breaking of the separation membrane **2** at the time of heating can be prevented. Further, a measurement device can be simplified. Further, a general-purpose product can be used as the measurement device, and hence costs can be reduced. Further, the upper limit of the average relative humidity of the gas A is, for example, 100%, more preferably 95%. When the upper limit falls within such ranges, the breaking of the separation membrane 2 at the time of heating can be prevented. Further, the effects of the disclosure of the present application can be stably obtained by setting the average relative humidity of the gas A to 95% or less.

The relative humidity (AU) of the gas A is preferably 0.1% or more, more preferably 0.5% or more, still more preferably 5% or more. When the relative humidity (AU) of the gas A falls within such ranges, the breaking of the separation membrane **2** at the time of heating can be prevented. Further, a measurement device can be simplified. Further, a general-purpose product can be used as the measurement device, and hence costs can be reduced. Further, the upper limit of the relative humidity (AU) of the gas A is, for example, 100%, more preferably 95%. When the upper limit falls within such ranges, the breaking of the separation membrane **2** at the time of heating can be prevented. Further, the effects of the disclosure of the present application can be stably obtained by setting the relative humidity (AU) of the gas A to 95% or less.

The average relative humidity of the gas B is preferably 10% or less, more preferably 5% or less. When the average relative humidity of the gas B falls within such ranges, the bumping, sudden expansion, thermal shock, and the like of water can be suppressed. Thus, the effect of preventing the breaking of the separation membrane complex **10** and/or the separation device **1** becomes pronounced. The lower limit of the average relative humidity of the gas B is, for example, 0.01%, more preferably 0.05%, but the lower limit is not limited to any particular value. When the lower limit falls within such ranges, dryer performance in a compressor can be simplified.

The relative humidity (BU) of the gas B is preferably 10% or less, more preferably 5% or less. When the relative humidity (BU) of the gas B falls within such ranges, the bumping, sudden expansion, thermal shock, and the like of water can be suppressed. Thus, the effect of preventing the breaking of the separation membrane complex **10** and/or the separation device **1** becomes pronounced. The lower limit of the relative humidity (BU) of the gas B is, for example, 0.01%, more preferably 0.05%, still more preferably 0.01%, but the lower limit is not limited to any particular value. When the lower limit falls within such ranges, dryer performance in a compressor can be simplified.

In one embodiment, the pressure of the first flow path **21** and/or the second flow path **22** is adjusted in accordance with the temperature of the environment under which the separation membrane complex **10** (substantially, the separation membrane **2)** is placed. In the transient operation method for a separation device, the initial temperature of the separation membrane **2** is, for example, from 0°C to 35°C, and an initial pressure in the first flow path **21** is, for example, from 0.1 MPaG to 20 MPaG. Further, at the time of completing the activation of the separation device, the temperature of the separation membrane **2** is, for example, from 100°C to 350°C, and the pressure in the first flow path **21** is, for example, from 0.1 MPaG to 20 MPaG.

Herein, the term "transient operation method" refers to a concept including an activation method and a stopping method. Thus, in the description above of the embodiment, the "transient operation method" may be an "activation method" (that is, the "transient operation method" may be replaced by an "activation method") or may be a "stopping method". Herein, the "activation method" involves heating of the separation membrane. Further, the "stopping method" involves decreasing the temperature of the separation membrane.

### B. Separation Device

### B-1. Separation Membrane Complex

As illustrated in FIG. **1****,** the separation device **1** typically includes the separation membrane complex **10** including: the substrate **3;** and the separation membrane **2.** Although not shown, the separation membrane complex **10** is housed in any appropriate case for use. The separation membrane complex **10** typically extends in the same direction as the direction in which the first flow path **21** extends. The length of the separation membrane complex **10** may be appropriately and suitably adjusted.

### B-1-1. Substrate

The substrate **3** supports the separation membrane **2.** In one embodiment, the substrate **3** is a porous substrate. The porous substrate has, for example, a so-called monolith-type structure including: a framework being continuous in a three-dimensional network pattern; and communication holes defined by the framework. The substrate **3** may contain a component for forming the separation membrane **2.**

The porous substrate may be formed of any appropriate material. Typical examples of a material for the porous substrate include a ceramic sintered compact. Examples of the ceramic sintered compact include alumina, silica, mullite, zirconia, titania, yttria, silicon nitride, silicon carbide, and cordierite. The ceramic sintered compacts can be used alone or in combination. A preferred one of the ceramic sintered compacts is alumina.

The porous substrate may contain an inorganic binding material. Examples of the inorganic binding material include titania, mullite, easily sinterable alumina, silica, glass frit, clay mineral, and easily sinterable cordierite. The inorganic binding materials can be used alone or in combination.

The porous substrate may be made up of a single layer or may have a multilayer structure in which multiple layers are stacked. In one embodiment, as illustrated in FIG. **2****,** the porous substrate has a multilayer structure including a plurality of layers being different in pore diameter. In this case, it is preferred that the pore diameter of the layer closer to the separation membrane **2** be smaller.

The average pore diameter of the porous substrate is, for example, from 0.01 µm to 70 µm, preferably from 0.05 µm to 25 µm. The average pore diameter of the porous substrate on the separation membrane side is from 0.01 µm to 1 µm, preferably from 0.05 µm to 0.5 µm. With regard to the distribution of the pore diameters in the whole including the surface and inside of the porous substrate, D5 is, for example, from 0.01 µm to 50 µm, D50 is, for example, from 0.05 µm to 70 µm, and D95 is, for example, from 0.1 µm to 2,000 µm. The porosity of the porous substrate on the separation membrane side is, for example, from 25% to 50%. The average pore diameter of the porous substrate may be measured with, for example, a mercury porosimeter, a perm porometer, or a nano-perm porometer.

As illustrated in FIG. **1****,** the substrate **3** typically separates the first flow path **21** and the second flow path **22** from each other. The substrate **3** may have any appropriate shape. Examples of the shape of the substrate **3** include a cylindrical shape, a honeycomb shape, and a plate-like shape.

In one embodiment, the substrate **3** is a cylindrical substrate **3a.** Examples of the sectional shape of the cylindrical substrate **3a** in the direction orthogonal to the length direction of the cylindrical substrate **3a** include a triangular shape, a rectangular shape, a pentagonal shape, a polygonal shape having six or more sides, a circular shape, and an elliptical shape, and a preferred one is a circular shape. The outer diameter and the length of the cylindrical substrate may be appropriately set in accordance with its purpose.

In this embodiment, the internal space of the cylindrical substrate **3a** (space defined by the inner peripheral surface of the cylindrical substrate) includes any one of the first flow path **21** or the second flow path **22,** and the external space of the cylindrical substrate **3a** (space outside the outer peripheral surface of the cylindrical substrate) includes another one of the first flow path **21** or the second flow path **22.** In the illustrated example, the internal space of the cylindrical substrate **3a** includes the first flow path **21,** and the external space of the cylindrical substrate **3a** includes the second flow path **22.**

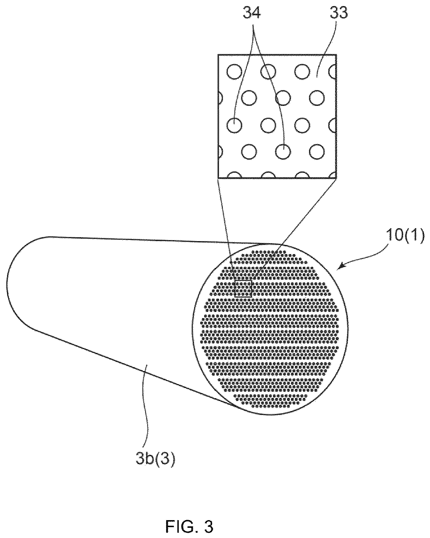

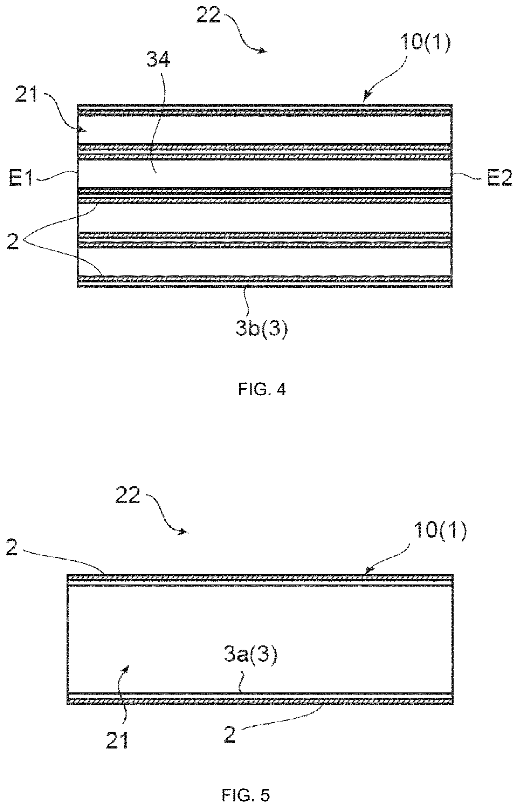

In another embodiment, as illustrated in FIG. **3** and FIG. **4****,** the substrate **3** is a honeycomb-shaped substrate **3b.** The honeycomb-shaped substrate **3b** includes a partition wall **33** that defines a plurality of cells **34.** The cells **34** are each formed in a cylindrical shape so as to penetrate the honeycomb-shaped substrate **3b** in its longitudinal direction.

The cells **34** extend from a first end surface **E1** (inflow end surface) to a second end surface **E2** (outflow end surface) of the honeycomb-shaped substrate **3b** in the longitudinal direction (axial direction) of the honeycomb-shaped substrate **3b** (see FIG. **4****).** The cells **34** each have any appropriate shape in cross section taken in the direction orthogonal to the length direction of the honeycomb-shaped substrate **3b.** Examples of the sectional shape of the cell include a triangular shape, a rectangular shape, a pentagonal shape, a polygonal shape having six or more sides, a circular shape, and an elliptical shape. The sectional shape and the size of the cell may be the same for all the cells or may be different for at least some of the cells. A preferred one of the above-mentioned sectional shapes of the cell is a circular shape.

The distance between the central axes of the plurality of cells **34** is, for example, from 0.3 mm to 20 mm. A cell density (that is, the number of cells **34** per unit area) in cross section taken in the direction orthogonal to the length direction of the honeycomb-shaped substrate may be appropriately set in accordance with its purpose. The cell density may be, for example, from 0.5 cell/cm² to 320 cells/cm². When the cell density falls within such a range, sufficient strength and effective geometric surface area (GSA) of the honeycomb-shaped substrate can be ensured.

The honeycomb-shaped substrate **3b** has any appropriate shape (overall shape). Examples of the honeycomb-shaped substrate include a columnar shape with a circular bottom surface, an elliptical cylindrical shape with an elliptical bottom surface, a prism shape with a polygonal bottom surface, and a pillar shape with an indefinite bottom surface. The honeycomb-shaped substrate **3b** of the illustrated example has a columnar shape. The outer diameter and the length of the honeycomb-shaped substrate may be appropriately set in accordance with its purpose.

In this embodiment, the internal space of each of the plurality of cells **34** (space defined by the inner peripheral surface of the cell) includes any one of the first flow path **21** or the second flow path **22,** and the external space of the honeycomb-shaped substrate **3b** (space outside the outer peripheral surface of the honeycomb-shaped substrate) includes another one of the first flow path **21** or the second flow path **22.** In the illustrated example, the internal space of the cell **34** includes the first flow path **21,** and the external space of the honeycomb-shaped substrate **3b** includes the second flow path **22.**

### B-1-2. Separation Membrane

The separation membrane **2** is typically directly provided on the surface of the substrate **3.** The separation membrane **2** may face the first flow path **21** (see FIG. **1** and FIG. **4****)** or may face the second flow path **22** (see FIG. **5****).**

In one embodiment, the separation membrane **2** faces the first flow path **21.**

In FIG. **1****,** the substrate **3** is the cylindrical substrate **3a.** The separation membrane **2** is formed on the inner surface of the cylindrical substrate **3a.** In the illustrated example, the first flow path **21** is defined in a portion (typically, the central portion) of the separation membrane complex **10,** in which the separation membrane **2** is absent, in cross section.

Further, in FIG. **4****,** the substrate **3** is the honeycomb-shaped substrate **3b.** The separation membrane **2** is formed on the inner surface of each of the plurality of cells **34.** The first flow path **21** is defined in a portion (typically, the central portion) of the cell **34,** in which the separation membrane **2** is absent, in cross section.

As in the illustrated example, the separation membrane **2** may be formed entirely on the inner surface of the cylindrical substrate **3a** or the inner surface of the cell **34** (that is, so as to surround the first flow path **21)** or may be formed partially on the inner surface of the cylindrical substrate **3a** or the inner surface of the cell **34.** The separation membrane that is formed so as to surround the first flow path can improve separation efficiency.

The separation membrane **2** allows a specific substance to permeate therethrough and be separated from the mixture by making use of, for example, a difference in molecular size and/or a difference in adsorptivity.

The separation membrane **2** may be formed of any appropriate material. Examples of the material for the separation membrane **2** include zeolite, MOF, and silica. Those materials can be used alone or in combination.

When the adsorptive substance to be separated contains water, a preferred example of the material for the separation membrane **2** is zeolite. In one embodiment, the separation membrane **2** is a zeolite membrane.

The zeolite membrane includes a membrane formed from zeolite on the surface of the substrate. The zeolite membrane may contain two or more kinds of zeolites different from each other in structure or composition.

Examples of the zeolite for forming the zeolite membrane include: zeolite in which an atom (T atom) positioned on the center of an oxygen tetrahedron (TO₄) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAU-type, RHO-type, SAT-type, and SOD-type zeolites. Of those zeolites, a LTA-type zeolite is preferred.

The maximum number of ring members of the zeolite is, for example, 12 or less, preferably 10 or less, more preferably 8 or less, and is, for example, 6 or more.

The zeolite film contains SiO₂ and Al₂O₃. The zeolite film may further contain an alkali metal. The alkali metal is, for example, sodium (Na) or potassium (K).

The molar ratio "SiO₂/Al₂O₃" in the zeolite film is, for example, 100 or less, preferably 10 or less, more preferably 5 or less, still more preferably less than 5. When the molar ratio "SiO₂/Al₂O₃" in the zeolite film is equal to or less than the above-mentioned upper limits, breakage of the zeolite film can be further stably suppressed. The lower limit of the molar ratio "SiO₂/Al₂O₃" in the zeolite film is typically 2. The molar ratio "SiO₂/Al₂O₃" may be measured by, for example, scanning electron microscopy-energy-dispersive X-ray spectroscopy (SEM-EDX; X-ray accelerating voltage: 10 kV).

The average pore diameter of the separation membrane **2** can be appropriately and suitably selected in accordance with the substance to be separated. The average pore diameter of the separation membrane **2** is, for example, from 0.2 nm to 1 nm, preferably from 0.3 nm to 0.5 nm. A separation membrane **2** having a smaller average pore diameter has higher selectivity. The average pore diameter of the separation membrane **2** is smaller than the average pore diameter of the substrate **3.** When the separation membrane **2** is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane **2** is, for example, from 0.05 µm to 30 µm, preferably from 0.1 µm to 20 µm, more preferably from 0.5 µm to 10 µm. A thicker separation membrane has higher selectivity. A thinner separation membrane increases a permeation rate.

The surface roughness (Ra) of the separation membrane **2** is, for example, 5 µm or less, preferably 2 µm or less, more preferably 1 µm or less, still more preferably 0.5 µm or less. The surface roughness (Ra) can be measured, for example, in conformity with JIS B 0601.

The separation membrane **2** may be formed by any appropriate method in accordance with a material for forming the membrane. For example, the zeolite membrane may be obtained by: applying zeolite serving as a seed crystal onto a separation membrane; immersing the substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

### B-2. Other Configurations

The above-mentioned separation device **1** may include any appropriate element in addition to the separation membrane complex **10.** The separation device **1** may include, for example: a supply unit for supplying a fluid (a gas supplied at the time of activation, the mixture supplied after the activation) or the like; a heating device for heating the fluid; and a recovery unit for recovering the fluid that has passed through the separation membrane complex. Examples of the heating device include a reactor involving a chemical reaction, a heater, and a heat exchanger. Th separation device **1** may further include a pressure adjustment unit capable of adjusting the pressure in the first flow path **21** and/or the second flow path **22** of the separation membrane complex **10.** The separation device **1** may further include a control unit capable of controlling the operation of the separation device **1.** Components of the separation device other than the separation membrane complex are described in, for example, WO 2018/225325 A1. The description of this publication is herein incorporated by reference.

### B-2. Supply Unit, First Recovery Unit, and Second Recovery Unit

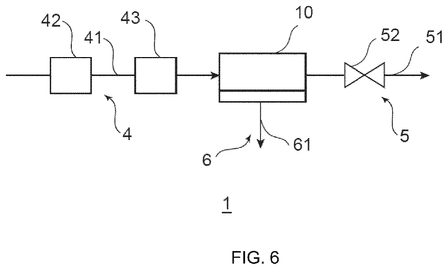

In one embodiment, as illustrated in FIG. **6****,** the separation device **1** includes, in addition to the separation membrane complex **10:** a supply unit **4** that supplies a mixture to the first flow path **21** of the separation membrane complex **10;** a first recovery unit **5** that recovers a fluid having passed through the first flow path **21;** and a second recovery unit **6** that recovers a permeate substance that has permeated through the separation membrane **2.** The separation device **1** of the illustrated example is configured so as to be capable of adjusting the temperature, the pressure, and the flow rate of the mixture passing through the first flow path. FIG. **6** is an explanatory diagram for illustrating one embodiment of the present disclosure, and the present disclosure is not limited to this embodiment.

The supply unit **4** of the illustrated example can adjust the temperature and the flow rate of the mixture supplied to (flowing into) the first flow path **21.** The supply unit **4** includes a supply line **41,** a heating device **42,** and a flow rate adjuster **43.**

The supply line **41** is a pipe for supplying the mixture to the first flow path **21.** The upstream end portion of the supply line **41** in the direction of supply of the mixture is connected to, for example, a storage tank that stores the mixture, although not shown. The downstream end portion of the supply line **41** in the direction of supply of the mixture is connected to the inflow port of the first flow path **21** of the separation membrane complex **10.**

The heating device **42** is provided to the supply line **41** and can heat the mixture passing through the supply line **41.** The heating device **42** can have any appropriate configuration.

The flow rate adjuster **43** can adjust the flow rate of the mixture passing through the supply line **41.** The flow rate adjuster **43** can have any appropriate configuration. In the illustrated example, the flow rate adjuster **43** is provided between the heating device **42** and the separation membrane complex **10** in the supply line **41.**

The supply unit **4** may include other devices as required. For example, other devices may be provided between the flow rate adjuster **43** and the separation membrane complex **10** in the supply line **41.**

The first recovery unit **5** of the illustrated example can adjust the pressure in the first flow path **21.** The first recovery unit **5** includes a first recovery line **51** and a pressure adjustment valve **52.**

The first recovery line **51** is a pipe through which a fluid that has passed through the first flow path **21** of the separation membrane complex **10** is allowed to pass. The upstream end portion of the first recovery line **51** in the direction of passage of the fluid is connected to the outflow port of the first flow path **21** of the separation membrane complex **10.** The downstream end portion of the first recovery line **51** in the direction of passage of the fluid is connected to, for example, a storage tank, although not shown.

The pressure adjustment valve **52** is provided to the first recovery line **51.** The pressure adjustment valve **52** can adjust the opening degree of the first recovery line **51,** and in turn, can adjust the pressure in the first flow path **21.**

The second recovery unit **6** of the illustrated example includes a second recovery line **61.**

The second recovery line **61** is a pipe through which a fluid that has passed through the second flow path **22** is allowed to pass from the second flow path **22** of the separation membrane complex **10.** The upstream end portion of the second recovery line **61** in the direction of passage of the fluid is connected to the outflow port of the second flow path **22** of the separation membrane complex **10.** The downstream end portion of the second recovery line **61** in the direction of passage of the fluid is connected to, for example, a storage tank, although not shown.

In the embodiment described above, the supply unit **4** on the upstream side with respect to the separation membrane complex **10** adjusts the temperature and the flow rate of the mixture supplied to (flowing into) the first flow path **21,** and the first recovery unit **5** on the downstream side with respect to the separation membrane complex **10** adjusts the pressure on the mixture in the first flow path **21.** However, the configuration of the separation device **1** is not limited to that described above. The supply unit **4** may be configured so as to be capable of adjusting the pressure on the mixture in the first flow path **21.** Further, the first recovery unit **5** may be configured so as to be capable of adjusting the flow rate of the mixture passing through the first flow path **21.**

### Industrial Applicability

The transient operation method for a separation device according to the embodiment of the present disclosure is used for the separation of a specific substance in a mixture, in particular, suitably used for the separation of water from a water-containing mixture.

### Reference Signs List

**1** separation device
**2** separation membrane
**3** substrate
**21** first flow path
**22** second flow path

## Claims

1. A transient operation method for a separation device, the separation device including a separation membrane complex including: a separation membrane; and a substrate arranged on one side of the separation membrane,
the separation device having a first flow path and a second flow path, the first flow path being positioned on a side closer to the separation membrane of the separation membrane complex, the second flow path being positioned on a side closer to the substrate of the separation membrane complex,
the transient operation method comprising supplying gases to the first flow path and the second flow path, respectively, and heating the separation membrane complex,
wherein an average relative humidity of a gas A supplied to the first flow path is higher than an average relative humidity of a gas B supplied to the second flow path.

2. The transient operation method for a separation device according to claim 1, wherein the average relative humidity of the gas B is 10% or less.

3. The transient operation method for a separation device according to any one of claims 1 or 2, wherein the separation membrane is a zeolite membrane.

4. The transient operation method for a separation device according to claim 3, wherein the zeolite membrane is made of LTA-type zeolite.

5. A transient operation method for a separation device, the separation device including a separation membrane complex including: a separation membrane; and a substrate arranged on one side of the separation membrane,
the separation device having a first flow path and a second flow path, the first flow path being positioned on a side closer to the separation membrane of the separation membrane complex, the second flow path being positioned on a side closer to the substrate of the separation membrane complex,
the transient operation method comprising supplying gases to the first flow path and the second flow path, respectively, and heating the separation membrane complex,
wherein a relative humidity of a gas A supplied to the first flow path is higher than a relative humidity of a gas B supplied to the second flow path.

6. The transient operation method according to claim 1 or 2, wherein the transient operation method is an activation method.

7. The transient operation method according to claim 1 or 2, wherein the transient operation method is a stopping method.
